# EUROPÄISCHE PATENTSCHRIFT

(11) **EP 1 369 072 B1**
(45) Veröffentlichungstag und Bekanntmachung des Hinweises auf die Patenterteilung: **21.02.2007**
(21) Anmeldenummer: 03011097.7
(22) Anmeldetag: 21.05.2003
(51) Int. Cl.: A47J 36/12

(54) **Deckel für ein Gargerät**
Lid for a cooking device
Couvercle pour un appareil de cuisson

(30) Priorität: 03.06.2002 DE 10224464
(43) Veröffentlichungstag der Anmeldung: 10.12.2003
(73) Patentinhaber: Frima SA, 68271 Wittenheim Cedex (FR); Rational AG, 86899 Landsberg/Lech (DE)
(72) Erfinder: Renaud, Frédéric, 68100 Mulhouse (FR); Michineau, Serge, 68190 Ensisheim (FR)
(74) Vertreter: Weber-Bruls, Dorothée

(56) Entgegenhaltungen:
- EP-A- 1 177 753
- GB-A- 468 248
- GB-A- 1 062 690
- US-B1- 6 581 587

## Beschreibung

Die vorliegende Erfindung betrifft einen Deckel für ein Gargerät nach dem Oberbegriff von Patentanspruch 1 sowie ein Verfahren zum Betreiben eines Gargeräts mit solch einem Deckel.

Aus dem Stand der Technik sind verschiedene Deckel für Gargeräte bekannt. So offenbart beispielsweise die DE 696 08 858 T2 ein Scharnier für einen Deckel bzw. Gehäusedeckel eines Kochgerätes, wie beispielsweise einer Friteuse. In diesem Scharnier ist für ein automatisches Anheben eines Deckels eine Feder vorgesehen. Die Enden dieser Feder laufen während eines Öffnens des Deckels durch eine in der Oberfläche des Scharniers ausgebildete Nut, die eine Bremsrampe bildet, so daß die Öffnungsbewegung des Deckels zum Ende hin gebremst werden kann.

Ein weiterer Deckel ist aus der DE 100 05 003 A1, die ein Garsystem mit Rohrkonstruktion offenbart, bekannt. Dort ist vorgesehen, daß ein Gargutbehälter mittels des Deckels verschlossen werden kann, indem der Deckel an einem Drehlager um eine horizontale Achse schwenkbar ist. Um das bei einer Drehung des Deckels um die Drehachse aufgrund der Schwerkraft desselben wirkende Drehmoment zu verringern und das Hochschwenken des Deckels für eine Bedienperson zu erleichtern, ist innerhalb des Drehlagers eine Feder vorgesehen, so daß das effektive Gewicht des Deckels durch die Federkraft verringert wird.

In der DE 196 53 279 A1 ist als Stand der Technik ein weiterer Deckel beschrieben. Dieser Deckel dient dem Abdecken einer Öffnung einer Garkammer, wobei vorgesehen ist, daß ein Garbehälter aus der Garkammer manuell oder mittels einer mechanischen Hebevorrichtung herausgehoben werden kann, ohne daß jedoch weitere Einzelheiten dieser Hebevorrichtung offenbart werden. Der der Neuentwicklung der DE 196 53 279 A1 zugrundeliegende Deckel ist dagegen senkrecht zur Ebene des Öffnungsrands höhenverstellbar gehalten. An der Unterseite des Deckels kann ein Garbehälter befestigt werden, der durch ein Heben und Senken des Deckels aus der Garkammer heraus- bzw. in diese hineinbewegt werden kann. Durch eine zusätzliche Verschwenkmöglichkeit des Deckels parallel zur Ebene der Öffnung der Garkammer soll ein leichteres Handling des Garbehälters erreichbar sein. Nachteilig bei dem in der DE 196 53 279 A1 offenbarten Deckel sowie dem darin offenbarten Verfahren ist jedoch, daß eine Manipulation eines in dem Garbehälter befindlichen Garguts, insbesondere wenn der Garbehälter während eines Garprozesses in die Garkammer abgesenkt ist, nicht möglich bzw. zumindest erschwert ist. Ferner ist das Gargerät konstruktiv sehr aufwendig und damit sowohl kostenintensiv als auch störanfällig und weist aufgrund der vorgesehenen Schwenkbarkeit des Deckels einen erhöhten Platzbedarf auf.

Ferner sind aus der US 6,022,572 sowie DE 689 15 992 T2 Deckel für Gargeräte bekannt, die im wesentlichen eine horizontale Position aufweisen und an dessen Unterseite eine Vorrichtung zur Aufnahme zumindest eines Garbehälters vorgesehen ist. Der Garbehälter kann dabei durch ein Senken bzw. Heben des Deckels in vertikale Richtung in einen Bottich abgesenkt bzw. aus diesem herausbewegt werden. Bei dem Deckel der DE 689 15 992 T2 ist vorgesehen, daß ein Teil des Deckels über ein Scharnier so gelagert ist, daß der Deckel ausschließlich für Reinigungszwecke aus einer horizontalen in eine vertikale Position verschwenkt werden kann. Diese Gargeräte weisen damit jedoch ebenfalls die zuvor genannten Nachteile auf. Der Deckel der US 6,022,572 ist zur Erfassung des Gewichts eines Garbehälters und/oder Garguts verschwenkbar gelagert.

Aus der GB 468,248 ist ein Gargerät mit einem Deckel bekannt, der einen Garbehälter öffnen und schließen kann, wobei die Bewegung des Deckels über einen Gegengewicht und Federn so eingestellt werden kann, daß bei jedem beliebigen Öffnungswinkel der Deckel in der gewünschten Position verbleibt und nicht wieder auf den Garbehälter zurückfällt.

Die EP 1 177 753 A1 offenbart ein Haushaltsgerät mit einem bewegbaren Deckel, wobei der Deckel des Haushaltsgeräts über ein Federelement vorgespannt wird, so daß der Deckel in seiner Schließposition und in seiner geöffneten Position alleine durch das Federelement gehalten wird.

Die GB 1,062,690 offenbart ein Gargerät mit einem Garbehälter und einem gattungsgemäßen Deckel, bei dem der Garbehälter erst über eine senkrechte Bewegung aus seiner verschlossenen Position in eine zweite Position bewegt werden kann und anschließend über eine Schwenkbewegung um eine Achse von der zweiten Position in eine offene Position bewegbar ist. Der gattungsgemäße Deckel soll dabei O-Ringe zwischen dem Deckel und dem Garbehälter schonen.

Der Erfindung liegt somit die Aufgabe zugrunde, den gattungsgemäßen Deckel derart weiterzuentwickeln, daß die Nachteile des Stands der Technik überwunden werden, insbesondere eine konstruktiv einfache Hebe-/Senkvorrichtung für einen Garkorb geliefert, eine Manipulation eines in dem Garkorb angeordneten Garguts während eines Garprozess ermöglicht und eine maximale Sicherheit erreicht wird. Ferner soll ein gegenüber dem Stand der Technik verbessertes Verfahren zum Betreiben eines Gargeräts, insbesondere umfassend einen erfindungsgemäßen Deckel, geliefert werden.

Die den Deckel betreffende Aufgabe wird erfindungsgemäß durch die kennzeichnenden Merkmale von Patentanspruch 1 gelöst.

Patentansprüche 2 bis 10 beschreiben bevorzugte Ausführungsformen der Erfindung.

Die das Verfahren betreffende Aufgabe wird gelöst durch ein Verfahren gemäß Patentanspruch 11.

Die Patentansprüche 11 bis 17 beschreiben bevorzugte Ausführungsformen des erfindungsgemäßen Verfahrens.

Ein erfindungsgemäßer Deckel für ein Gargerät ist vorteilhafterweise so ausgeführt, daß eine konstruktiv einfache Hebe-/Senkvorrichtung realisiert wird, die insbesondere an bereits vorhandene Deckel eines Gargeräts angepaßt bzw. in diese integriert werden kann. Ferner ermöglicht es der erfindungsgemäße Deckel sowie das erfindungsgemäße Verfahren, daß ein Gargut, das sich in einem Garkorb befindet, der über die Hebe-/Senkvorrichtung in einen Garbehälter abgesenkt bzw. aus diesem herausgehoben werden kann, und/oder ein Garmedium im Garbehälter stets manipuliert, beispielsweise umgerührt, gewendet, nachgefüllt oder dergleichen, werden kann bzw. können. Dabei ist vorgesehen, daß ein Heben und Senken des Garkorbs über eine Antriebsvorrichtung erfolgt und somit automatisiert werden kann. Dabei kann von einem Benutzer der zeitliche Beginn bzw. die Zeitdauer eines Garprozesses vorgegeben und dieser dann automatisch durch ein Senken bzw. Heben des Garkorbs gesteuert werden. Beispielsweise der Einsatz einer Druckgasfeder als Teil der Antriebsvorrichtung ermöglicht es, daß ein manuelles Verschließen des Deckels auch bei Verwendung eines Garkorbs ermöglicht wird. Dies ermöglicht es einerseits, einen Druckgarprozess unter Verwendung eines Garkorbs bei Nutzung der Hebe-/Senkvorrichtung durchzuführen, und andererseits dient dieses Merkmal einer erhöhten Sicherheit, da ein manuelles Verschließen des Deckels, insbesondere im Falle einer Überhitzung des Garmediums im ersten Garbehälter ermöglicht wird. Ein derartiges Verschließen ist im wesentlichen ungehindert möglich, und es wird ferner eine Zerstörung bzw. Überbeanspruchung einer Tragevorrichtung der Hebe- bzw. Senkvorrichtung vermieden. Die Druckgasfeder sorgt des weiteren für ein problemloses Öffnen des Deckels der Erfindung.

Weitere Merkmale und Vorteile der Erfindung ergeben sich aus der nachstehenden Beschreibung, in der eine bevorzugte Ausführungsform der Erfindung beispielhaft anhand schematischer Zeichnungen im Einzelnen erläutert ist. Dabei zeigt:
- Figur 1: eine Teilseitenansicht einer Antriebsvorrichtung einer Ausführungsform eines erfindungsgemäßen Deckels in angehobener Position eines Garkorbs;
- Figur 2: eine Teilseitenansicht der Antriebsvorrichtung der Figur 1 in abgesenkter Position des Garkorbs;
- Figur 3: eine Teilseitenansicht der Antriebsvorrichtung der Figuren 1 und 2 im geschlossenen Zustand des Deckels; und
- Figur 4: eine perspektivische Detailansicht eines Verbindungselements der Antriebsvorrichtung der Figuren 1 bis 3.

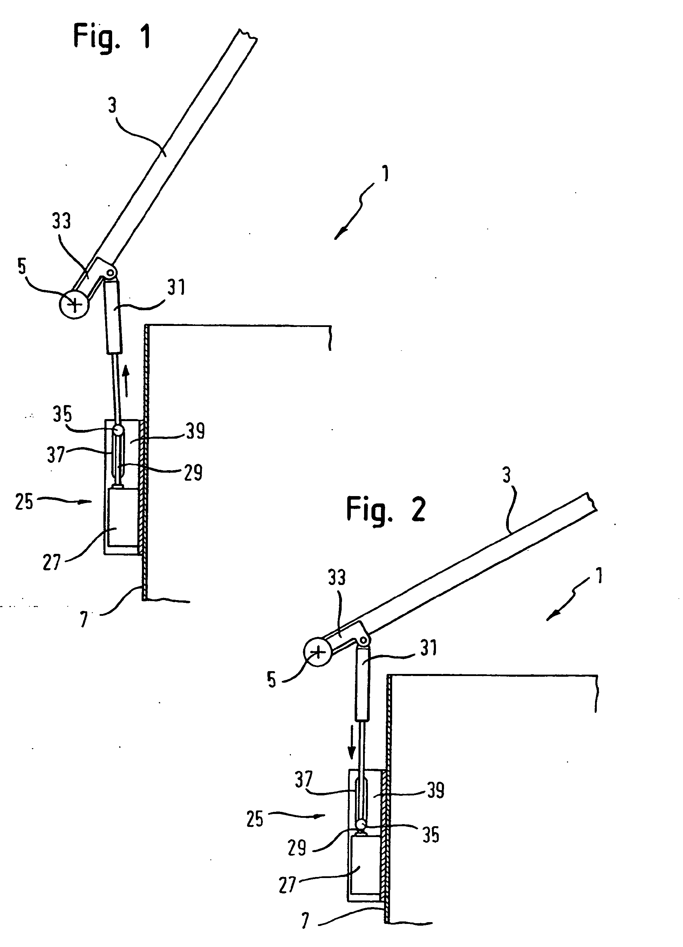

In einer vorteilhaften Ausführungsform gemäß der Erfindung erfolgt das Verschwenken eines Deckels und damit das Heben und Senken eines Garkorbs über eine elektromechanische Antriebsvorrichtung. Eine solche ist den in Figuren 1 bis 4 dargestellt. Das dabei in Figur 1 ausschnittsweise dargestellte Gargerät 1 umfaßt einen Deckel 3, der zum Verschließen eines ersten Garbehälters, insbesondere in Form eines Bottichs 7 dient. Ferner umfaßt der Deckel 3 eine Hebe-/Senkvorrichtung für einen nicht dargestellten zweiten Garbehälter, insbesondere in Form eines Garkorbs, der aus bzw. in den ersten Garbehälter hebbar bzw. senkbar ist, um darin plaziertes Gargut in einem Garmedium in dem Bottich 7 zu garen. Die in Figur 1 dargestellte Position des Deckels 3 entspricht dabei der Öffnungsposition des Deckels 3, in der sich der an dem Deckel 3 befestigte Garkorb beispielsweise außerhalb des Bottichs 7 befindet.

Wie Figur 1 ferner zu entnehmen ist, ist der Deckel 3 um eine Drehachse 5 drehbar gelagert. Dabei wird zumindest teilweise ein Verschwenken des Deckels 3 über die Antriebsvorrichtung 25 bewirkt, die eine elektrische Antriebseinheit 27, mittels der eine Hubbewegung einer Antriebsstange 29 erzwingbar ist, umfaßt. Diese Hubbewegung der Antriebsstange 29 wird über ein Übertragungselement in Form einer Druckgasfeder 31 und einen Hebelarm 33 in eine Drehbewegung des Deckels 3 um die Drehachse 5 umgewandelt. Die Verbindung zwischen der Druckgasfeder 31 und der Antriebsstange 29 erfolgt über ein Gelenkelement, das in Figur 4 vergrößert dargestellt ist und einen Stift 35 aufweist, der in zumindest einer Nut 37 einer relativ zum Bottich 7 fixierten Eisenplatte 39 geführt ist. Durch die Länge der Nut 37 werden die Endpunkte der Hubbewegung der Antriebsstange 29 festgelegt. Vorteilhafterweise entsprechen diese Endpunkte gerade zwei Positionen des Deckels 3, wobei in der ersten Position der Garkorb sich außerhalb bzw. oberhalb des Bottichs 7 und damit außerhalb eines Garmediums befindet, siehe die Öffnungsposition von Figur 1, und in der zweiten Position der Garkorb in den Bottich 7 abgesenkt ist, was als Garposition in Figur 2 dargestellt ist. Wie aus Figur 2 ersichtlich, findet der Stift 35 in der Garposition Anschlag am unteren Ende der Nut 37 innerhalb der Eisenplatte 39. Wie aus Figur 4 ferner ersichtlich, endet die Antriebsstange 29 in einer gabelförmigen Aufnahme 41 für ein Gelenkelement 43, welches mit der Druckgasfeder 31 verbunden ist. Das Gelenkelement 43 steht ferner in Wirkverbindung mit dem Stift 35, welcher beidseitig Eingriff in Nuten 37 findet, die in der U-förmigen Eisenplatte 39 ausgebildet sind.

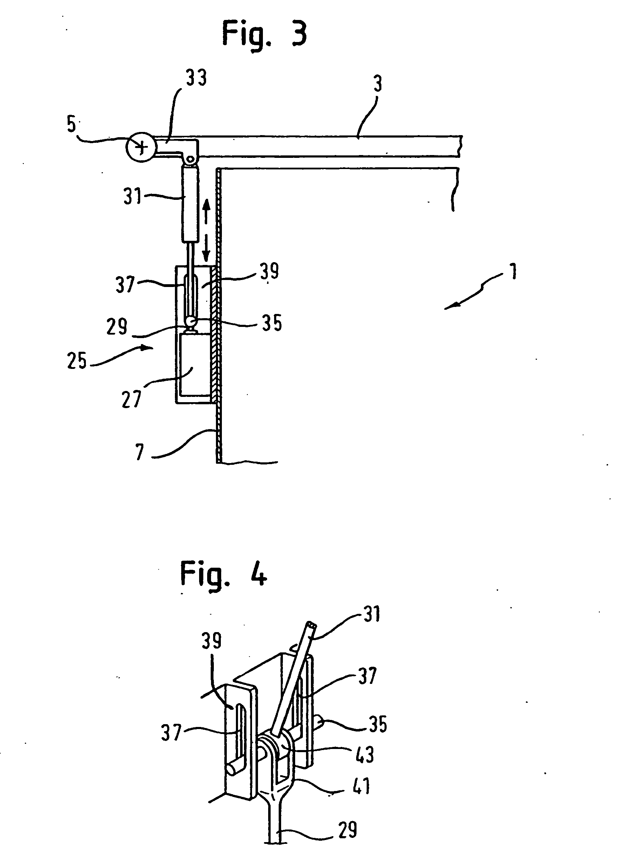

In Figur 3 ist eine dritte Position des Deckels 3 dargestellt, in der der Bottich 7 durch den Deckel 3 verschlossen wird, weshalb diese Position auch Schließposition genannt wird. Obwohl sich der Stift 35 in der in Figur 2 dargestellten Garposition des Deckels 3 am unteren Anschlag der Nut 37 befindet, ist ein weiteres Verschwenken des Deckels 3 in die waagerechte Schließposition möglich. Dies wird durch die Druckgasfeder 31 ermöglicht. Durch die Verwendung der Druckgasfeder 31 in dem Übertragungselement wird somit erreicht, daß ein Benutzer zu jedem Zeitpunkt unabhängig von der Antriebsvorrichtung 25 das Verschwenken des Deckels 3, manuell, vornehmen kann. Insbesondere ist dies also auch dann möglich, wenn es zu einer Überhitzung eines Garmediums innerhalb des Bottichs 7 kommt. Zu diesem Zweck verschwenkt der Benutzer den Deckel 3 gegen die Kraft der Druckgasfeder 31 in die in Figur 3 dargestellte Schließposition und verriegelt den Deckel 3 in dieser Position über eine nicht dargestellte Verriegelungseinrichtung. Nach einem Öffnen der Verriegelungseinrichtung wird dann der Deckel 3 aufgrund der in der Druckgasfeder 31 gespeicherten Energie automatisch geöffnet. Durch die Druckgasfeder 31 wird ferner erreicht, daß diese Öffnungsbewegung kontrolliert abläuft und kein Aufspringen des Deckels 3 erfolgt. Ein solches Aufspringen würde eine erhöhte Gefahr für einen Benutzer darstellen, da er einerseits vom Deckel 3 getroffen werden könnte oder Garmedium aus dem Bottich 7 mit einem mittels der Hebe-/Senkvorrichtung an dem Deckel 3 befestigten Garkorb herausgespritzt werden könnte.

Somit ermöglicht es die Antriebsvorrichtung 25, daß ein automatisches Heben und Senken eines Garkorbs durch eine Verschwenkbewegung des Deckels 3 erreicht werden kann. Zu diesem Zweck ist die Antriebseinheit 27 mit einer nicht dargestellten Steuer- und Regeleinheit des Gargeräts 1 verbunden. Mittels nicht dargestellter Eingabevorrichtungen des Gargeräts 1 kann ein Benutzer beispielsweise den Beginn eines Garprozesses sowie eine Gardauer eingeben. Mittels der Steuer- und Regeleinheit wird dann ein Garmedium innerhalb des Bottichs 7 erhitzt und mittels der Antriebseinheit 27 ein Garkorb durch eine Verschwenkbewegung des Deckels 3 in den Bottich 7 abgesenkt. Nach Ablauf der vorgegebenen Gardauer wird dann der Garkorb mittels einer über die Antriebseinheit 27 hervorgerufene Schwenkbewegung des Deckels 3 aus dem Bottich 7 gehoben. In weiteren vorteilhaften Ausführungsformen kann vorgesehen sein, daß die Steuer- und Regeleinheit mit einem Gewichtssensor verbunden ist, der mit der Antriebsvorrichtung 25 in Wirkverbindung steht. Dieser Sensor mißt die Krafteinwirkung auf die Antriebsvorrichtung 25 und somit das Drehmoment um die Drehachse 5, wodurch eine Bestimmung des Gewichts eines in dem Garkorb befindlichen Garguts ermöglicht wird. Dieser ermittelte Wert kann dann zur Garprozeßsteuerung eingesetzt werden.

Die in der vorstehenden Beschreibung, in den Zeichnungen sowie in den Ansprüchen offenbarten Merkmale der Erfindung können sowohl einzeln als auch in jeder beliebigen Kombination zur Verwirklichung der Erfindung in ihren verschiedenen Ausführungsformen wesentlich sein.

## Patentansprüche

1. Deckel (3) für ein Gargerät (1) mit zumindest einem von dem Deckel (3) zumindest teilweise verschließbaren ersten Garbehälter, insbesondere in Form eines Tiegels oder Bottichs (7), und zumindest eine Antriebsvorrichtung (25) in Wirkverbindung mit einer Schwenkvorrichtung zum automatischen Verschwenken des Deckels (3), die zumindest eine Antriebseinheit (27) und ein die Drehachse (5) des Deckels (3) mit der Antriebseinheit (27) verbindendes Übertragungselement (31, 33) umfaßt, **gekennzeichnet durch** zumindest die Schwenkvorrichtung, über die der Deckel (3) um eine im wesentlichen horizontal verlaufende Drehachse (5) relativ zum Gargerät (1) zwischen zumindest einer ersten, den ersten Garbehälter (7), insbesondere druckdicht, verschließenden Schließposition und zumindest einer zweiten, den ersten Garbehälter (7) öffnenden Öffnungsposition, insbesondere stufenlos, verschwenkbar ist, wobei das Übertragungselement zumindest ein Verbindungselement (33) und eine Federeinrichtung (31) derart aufweist, daß
der Deckel (3) zumindest in die Schließposition sowie aus der Schließposition in Richtung der Öffnungsposition manuell verschwenkbar ist und zumindest die Schließposition und die Öffnungsposition arretierbar sind.

2. Deckel nach Anspruch 1, **dadurch gekennzeichnet, daß**
die Federeinrichtung eine Druckgasfeder (31) und/oder Schraubenfeder umfaßt, und/oder das Verbindungselement einen Hebelarm (33) und/oder einen Hubzylinder umfaßt.

3. Deckel nach Anspruch 1 oder 2, **dadurch gekennzeichnet, daß**
das Übertragungselement, insbesondere das Verbindungselement (31,33), zum Arretieren des Deckels (3) zumindest einen, insbesondere mechanischen, Anschlag aufweist.

4. Deckel nach einem der vorangehenden Ansprüche, **gekennzeichnet durch**
zumindest eine Gegenkrafteinrichtung, insbesondere in Form einer Schrauben-, Spiral- und/oder Torsionsfeder und/oder umfassend zumindest ein Gegengewicht, zur Erleichterung des, insbesondere manuellen, Verschwenkens des Deckels zwischen der Schließ- und Öffnungsposition, wobei die Gegenkrafteinrichtung vorzugsweise in Wirkverbindung mit der Antriebsvorrichtung steht.

5. Deckel nach einem der vorangehenden Ansprüche, **gekennzeichnet durch**
zumindest eine Hebe-/Senkvorrichtung für zumindest einen zweiten Garbehälter, insbesondere in Form eines Garkorbs, über die der zweite Garbehälter aus bzw. in den ersten Garbehälter hebbar bzw. senkbar ist, wobei die Hebe-/Senkvorrichtung mit der Schwenkvorrichtung derart in Wirkverbindung steht, daß der zweite Garbehälter **durch** Verschwenken des Deckels aus zumindest einer dritten Warteposition, in welcher der zweite Garbehälter zumindest teilweise außerhalb und oberhalb des ersten Garbehälters und/oder eines im ersten Garbehälter einfüllbaren Garmediums angeordnet ist, in zumindest eine vierte Garposition, in welcher der zweite Garbehälter im wesentlichen in dem ersten Garbehälter und/oder dem Garmedium angeordnet ist, bewegbar ist.

6. Deckel nach einem der vorangehenden Ansprüche, **dadurch gekennzeichnet, daß**
die Antriebsvorrichtung (25) mechanisch, elektromechanisch, hydraulisch, elektrohydraulisch, pneumatisch und/oder elektropneumatisch arbeitet, und/oder von der Schwenkvorrichtung und/oder der Hebe-/Senkvorrichtung umfaßt ist.

7. Deckel nach einem der vorangehenden Ansprüche, **gekennzeichnet durch**
zumindest eine Sicherheitsvorrichtung, über die der Deckel bei der Durchführung eines Druckgarprozeßes innerhalb des ersten Garbehälters erst nach Ablassen des Drucks aus dem ersten Garbehälter aus der Schließposition heraus verschwenkbar ist.

8. Deckel nach einem der vorangehenden Ansprüche, **gekennzeichnet durch**
zumindest einen Sensor, insbesondere in Form eines Gewichtssensors, Rauchsensors, Drucksensors, Tempartursensors und/oder Positionssensors.

9. Deckel nach einem der vorangehenden Ansprüche, **gekennzeichnet durch**
eine Ein- und/oder Ausgabeeinheit, insbesondere umfassend zumindest einen Schalter, eine Anzeige, einen Lautsprecher und/oder ein Mikrophon.

10. Deckel nach einem der vorangehenden Ansprüche, **gekennzeichnet durch**
zumindest eine Steuer- und/oder Regeleinrichtung in Verbindung mit der Schwenkvorrichtung, der Hebe-/Senkvorrichtung, der Antriebsvorrichtung (25), der Antriebseinheit (27), der Gegenkrafteinrichtung, dem Übertragungselement, dem Anschlag, der Tragevorrichtung (15), dem Verbindungselement (31, 13), der Sicherheitsvorrichtung, der Federeinrichtung, dem Sensor und/oder der Ein- und/oder Ausgabeeinheit.

11. Verfahren zum Betreiben eines Gargeräts, umfassend einen Deckel nach einem der vorangehenden Ansprüche und einen zumindest teilweise mit dem Deckel verschließbaren ersten Garbehälter, insbesondere in Form eines Tiegels oder Bottichs, wobei
der Deckel über eine Schwenkvorrichtung um eine im wesentlichen horizontal verlaufenden Drehachse relativ zum Gargerät zum Öffnen bzw. Verschließen des ersten Garbehälters in zumindest eine erste Schließposition, in welcher der erste Garbehälter, insbesondere druckdicht, verschlossen wird, und eine zweite Öffnungsposition, in welcher der erste Garbehälter zugänglich wird, verschwenkt wird, und
der Deckel mittels einer Antriebsvorrichtung automatisch und zumindest in die Schließposition gegen die Kraft der Federeinrichtung (31) manuell verschwenkt wird.

12. Verfahren nach Anspruch 11, **dadurch gekennzeichnet, daß**
zumindest ein zweiter Garbehälter, insbesondere in Form eines Garkorbs, mittels einer vom Deckel umfaßten Hebe-/Senkvorrichtung in den ersten Garbehälter hinein- bzw. aus diesem herausbewegt wird, wobei der zweite Garbehälter durch Verschwenken des Deckels aus zumindest einer Warteposition, in welcher der zweite Garbehälter zumindest teilweise oberhalb und außerhalb des ersten Garbehälters und/oder eines im ersten Garbehälter eingefüllten Garmediums positionert wird, in zumindest eine Garposition, in welcher der zweite Garbehälter im wesentlichen in dem ersten Garbehälter und/oder dem Garmedium positioniert wird.

13. Verfahren nach Anspruch 12, **dadurch gekennzeichnet, daß**
die Warteposition mit der Öffnungsposition zusammenfällt, und/oder
der Deckel mittels der Antriebsvorrichtung zwischen der Warteposition und der Garposition verschwenkt wird.

14. Verfahren nach Anspruch 12 oder 13, **dadurch gekennzeichnet, daß**
die Verbindung zwischen dem Deckel und dem zweiten Garbehälter gelöst werden kann, insbesondere beim Verschwenken in die Schließposition.

15. Verfahren nach einem der Ansprüche 11 bis 14, **dadurch gekennzeichnet, daß**
der Deckel gesteuert und/oder geregelt bewegt wird in Abhängigkeit von dem Garmedium im ersten Garbehälter, einem Gargut im zweiten Garbehälter, einem Garverfahren und/oder einem Reinigungsverfahren.

16. Verfahren nach Anspruch 15, **dadurch gekennzeichnet, daß**
die Steuerung und/oder Regelung und/oder eine Diagnose über einen Datentransfer, insbesondere umfassend das Internet, durchgeführt wird.

17. Verfahren nach einem der Ansprüche 11 bis 16, **dadurch gekennzeichnet, daß**
der Deckel mit einem Benutzer kommuniziert über eine Ein- und/oder Ausgabeeinheit.

## Claims

1. Lid (3) for a cooking device (1) having at least one first cooking container, in particular in the form of a pot or tub (7), which can be at least partially closed by the lid (3), and at least one drive apparatus (25) which is operatively connected to a pivot apparatus for automatically pivoting the lid (3) and comprises at least one drive unit (27) and a transmission element (31, 33) which connects the rotary shaft (5) of the lid (3) to the drive unit (27), **characterized by** at least the pivot apparatus by means of which the lid (3) can be pivoted, in particular smoothly, relative to the cooking device (1) about a substantially horizontal rotary shaft (5) between at least one first, closed position which closes the first cooking container (7), in particular in a pressure-tight manner, and at least one second, opening position which opens the first cooking container (7), with the transmission element having at least one connecting element (33) and a spring device (31) in such a way that the lid (3) can be manually pivoted at least into the closed position and out of the closed position in the direction of the opening position and at least the closed position and the opening position can be locked.

2. Lid according to Claim 1, **characterized in that** the spring device comprises a compressed gas spring (31) and/or helical spring, and/or the connecting element comprises a lever arm (33) and/or a lifting cylinder.

3. Lid according to Claim 1 or 2, **characterized in that** the transmission element, in particular the connecting element (31, 33), has at least one, in particular mechanical, stop for locking the lid (3).

4. Lid according to one of the preceding claims, **characterized by** at least one opposing-force device, in particular in the form of a helical, spiral and/or torsion spring and/or comprising at least one counterweight, for facilitating, in particular manual, pivoting of the lid between the closed position and the opening position, with the opposing-force device preferably being operatively connected to the drive apparatus.

5. Lid according to one of the preceding claims, **characterized by** at least one raising/lowering apparatus for at least one second cooking container, in particular in the form of a cooking basket, by means of which the second cooking container can be raised and lowered out of and into the first cooking container, with the raising/lowering apparatus being operatively connected to the pivot apparatus in such a way that the second cooking container can be moved by pivoting the lid from at least one third waiting position, in which the second cooking container is arranged at least partially outside and above the first cooking container and/or a cooking medium which can be filled into the first cooking container, into at least one fourth cooking position in which the second cooking container is arranged substantially in the first cooking container and/or the cooking medium.

6. Lid according to one of the preceding claims, **characterized in that** the drive apparatus (25) operates mechanically, electromechanically, hydraulically, electrohydraulically, pneumatically and/or electropneumatically, and/or is part of the pivot apparatus and/or the raising/lowering apparatus.

7. Lid according to one of the preceding claims, **characterized by** at least one safety apparatus by means of which the lid can be pivoted out of the closed position only after the pressure is released from the first cooking container when a pressure-cooking process is carried out in the first cooking container.

8. Lid according to one of the preceding claims, **characterized by** at least one sensor, in particular in the form of a weight sensor, smoke sensor, pressure sensor, temperature sensor and/or position sensor.

9. Lid according to one of the preceding claims, **characterized by** an input and/or output unit, in particular comprising at least one switch, a display, a loudspeaker and/or a microphone.

10. Lid according to one of the preceding claims, **characterized by** at least one open-loop and/or closed-loop control device in conjunction with the pivot apparatus, the raising/lowering apparatus, the drive apparatus (25), the drive unit (27), the opposing-force device, the transmission element, the stop, the support apparatus (15), the connecting element (31, 33), the safety apparatus, the spring device, the sensor and/or the input and/or output unit.

11. Method of operating a cooking device comprising a lid according to one of the preceding claims and a first cooking container, in particular in the form of a pot or tub, which can be at least partially closed by the lid, with the lid being pivoted relative to the cooking device by means of a pivot apparatus about a substantially horizontal rotary shaft into at least one first closed position, in which the first cooking container is closed, in particular in a pressure-tight manner, and a second opening position, in which the first cooking container is accessible, in order to open and close the first cooking container, and the lid is pivoted automatically by means of a drive apparatus and manually against the force of the spring device (31) at least into the closed position.

12. Method according to Claim 11, **characterized in that** at least one second cooking container, in particular in the form of a cooking basket, is moved into and out of the first cooking container by means of a raising/lowering apparatus which is part of the lid, with the second cooking container being moved by pivoting the lid out of at least one waiting position, in which the second cooking container is positioned at least partially outside and above the first cooking container and/or a cooking medium filled into the first cooking container, into at least one cooking position in which the second cooking container is positioned substantially in the first cooking container and/or the cooking medium.

13. Method according to Claim 12, **characterized in that** the waiting position coincides with the opening position, and/or the lid is pivoted between the waiting position and the cooking position by means of the drive apparatus.

14. Method according to Claim 12 or 13, **characterized in that** the connection between the lid and the second cooking container can be released, in particular when pivoting into the closed position.

15. Method according to one of Claims 11 to 14, **characterized in that** the lid is moved by open-loop or closed-loop control as a function of the cooking medium in the first cooking container, a product being cooked in the second cooking container, a cooking process and/or a cleaning process.

16. Method according to Claim 15, **characterized in that** open-loop and/or closed-loop control and/or diagnosis is carried out by means of data transfer, in particular involving the Internet.

17. Method according to one of Claims 11 to 16, **characterized in that** the lid communicates with a user via an input and/or output unit.

## Revendications

1. Couvercle (3) pour un appareil de cuisson (1) ayant au moins un premier récipient de cuisson, pouvant être fermé au moins en partie par le couvercle (3), en particulier sous la forme d'une casserole ou d'une cuve (7), et au moins un dispositif d'entraînement (25) en liaison active avec un dispositif formant bascule pour le basculement automatique du couvercle (3), comportant au moins une unité d'entraînement (27), un élément de transmission (31, 33) reliant l'axe de rotation (5) du couvercle (3) à l'unité d'entraînement (27), **caractérisé en ce qu'**au moins le dispositif formant bascule, par l'intermédiaire duquel le couvercle (3) peut être basculé autour d'un axe de rotation (5) essentiellement horizontal par rapport à l'appareil de cuisson (1) entre au moins une première position de fermeture, en particulier étanche sous pression, fermant le premier récipient de cuisson (7), et au moins une deuxième position d'ouverture ouvrant le premier récipient de cuisson (7), en particulier sans à-coups, l'élément de transmission présentant au moins un élément de liaison (33) et un dispositif à ressort (31), de sorte que le couvercle (3) peut être basculé manuellement au moins dans la position de fermeture, ainsi qu'à partir de la position de fermeture en direction de la position d'ouverture, et au moins la position de fermeture et la position d'ouverture peuvent être bloquées.

2. Couvercle selon la revendication 1, **caractérisé en ce que** le dispositif à ressort comporte un ressort pneumatique (31) et/ou un ressort hélicoïdal, et/ou l'élément de liaison comporte un bras de levier (33) et/ou un vérin.

3. Couvercle selon la revendication 1 ou 2, **caractérisé en ce que** l'élément de transmission, en particulier l'élément de liaison (31, 33), en vue du blocage du couvercle (3), présente au moins un butoir, en particulier mécanique.

4. Couvercle selon l'une quelconque des revendications précédentes, **caractérisé par** au moins un dispositif de réaction, en particulier sous la forme d'un ressort hélicoïdal, à boudin et/ou de torsion et/ou comportant au moins un contrepoids, pour faciliter le basculement, en particulier manuel, du couvercle entre les positions de fermeture et d'ouverture, le dispositif de réaction étant de préférence en liaison active avec le dispositif d'entraînement.

5. Couvercle selon l'une quelconque des revendications précédentes, **caractérisé par** au moins un dispositif d'abaissement de levage pour au moins un deuxième récipient de cuisson, en particulier sous la forme d'un panier de cuisson, par l'intermédiaire duquel le deuxième récipient de cuisson peut être levé du premier récipient de cuisson, ou abaissé dans celui-ci, le dispositif d'abaissement de levage étant en liaison active avec le dispositif formant bascule, de sorte que le deuxième récipient de cuisson peut être amené, par le basculement du couvercle à partir d'au moins une troisième position d'attente, dans laquelle le deuxième récipient de cuisson est disposé au moins en partie en dehors et au-dessus du premier récipient de cuisson et/ou d'un milieu de cuisson pouvant être chargé dans le premier récipient de cuisson, dans au moins une quatrième position de cuisson, dans laquelle le deuxième récipient de cuisson est essentiellement disposé dans le premier récipient de cuisson et/ou le milieu de cuisson.

6. Couvercle selon l'une quelconque des revendications précédentes, **caractérisé en ce que** le dispositif d'entraînement (25) fonctionne de manière mécanique, électromécanique, hydraulique, électrohydraulique, pneumatique et/ou électropneumatique, et/ou est inclus dans le dispositif formant bascule et/ou le dispositif d'abaissement de levage.

7. Couvercle selon l'une quelconque des revendications précédentes, **caractérisé par** au moins un dispositif de sécurité, par l'intermédiaire duquel le couvercle ne peut être basculé, à partir de la position de fermeture lors de la mise en oeuvre d'un procédé de cuisson sous pression à l'intérieur du premier récipient de cuisson, qu'après la détente de la pression du premier récipient de cuisson.

8. Couvercle selon l'une quelconque des revendications précédentes, **caractérisé par** au moins un capteur, en particulier sous la forme d'un capteur de poids, d'un capteur de fumée, d'un capteur de pression, d'un capteur de température et/ou d'un capteur de position.

9. Couvercle selon l'une quelconque des revendications précédentes, **caractérisé par** une unité d'entrée et/ou de sortie, en particulier comportant au moins un contacteur, un affichage, un haut-parleur et/ou un microphone.

10. Couvercle selon l'une quelconque des revendications précédentes, **caractérisé par** au moins un dispositif de commande et/ou de régulation en liaison avec le dispositif formant bascule, le dispositif d'abaissement de levage, le dispositif d'entraînement (25), l'unité d'entraînement (27), le dispositif de réaction, l'élément de transmission, le butoir, le dispositif de portage (15), l'élément de liaison (31, 13), le dispositif de sécurité, le dispositif à ressort, le capteur et/ou l'unité d'entrée et/ou de sortie.

11. Procédé pour l'exploitation d'un appareil de cuisson comportant un couvercle selon l'une quelconque des revendications précédentes, et un premier récipient de cuisson pouvant être fermé au moins en partie par le couvercle, en particulier sous la forme d'une casserole ou d'une cuve, le couvercle étant basculé par l'intermédiaire d'un dispositif formant bascule autour d'un axe de rotation essentiellement horizontal par rapport à l'appareil de cuisson en vue de la fermeture du premier récipient de cuisson dans au moins une première position de fermeture, dans laquelle le premier récipient de cuisson, en particulier étanche sous pression, est fermé, et en vue de son ouverture dans une deuxième position d'ouverture, dans laquelle le premier récipient de cuisson est accessible, et
le couvercle étant basculé automatiquement par l'intermédiaire d'un dispositif d'entraînement, et au moins manuellement à l'encontre de la force du dispositif à ressort (31).

12. Procédé selon la revendication 11, **caractérisé en ce qu'**au moins un deuxième récipient de cuisson, en particulier sous la forme d'un panier de cuisson, est introduit dans le premier récipient de cuisson, ou est sorti de celui-ci, par l'intermédiaire d'un dispositif d'abaissement de levage inclus dans le couvercle, le deuxième récipient de cuisson étant positionné grâce au basculement du couvercle à partir d'au moins une position d'attente, dans laquelle le deuxième récipient de cuisson est positionné au moins en partie au-dessus et en dehors du premier récipient de cuisson, et/ou d'un milieu de cuisson chargé dans le premier récipient de cuisson, dans au moins une position de cuisson, dans laquelle le deuxième récipient de cuisson est positionné essentiellement dans le premier récipient de cuisson et/ou dans le milieu de cuisson.

13. Procédé selon la revendication 12, **caractérisé en ce que** la position d'attente coïncide avec la position d'ouverture, et/ou le couvercle est basculé par l'intermédiaire du dispositif d'entraînement entre la position d'attente et la position de cuisson.

14. Procédé selon la revendication 12 ou 13, **caractérisé en ce que** la liaison entre le couvercle et le deuxième récipient de cuisson peut être obtenue en particulier lors du basculement dans la position de fermeture.

15. Procédé selon l'une quelconque des revendications 11 à 14, **caractérisé en ce que** le couvercle est déplacé de manière commandée et/ou régulée, en fonction du milieu de cuisson dans le premier récipient de cuisson, d'un produit à cuire dans le deuxième récipient de cuisson, d'un procédé de cuisson et/ou d'un procédé de nettoyage.

16. Procédé selon la revendication 15, **caractérisé en ce que** la commande et/ou la régulation et/ou un diagnostic est ou sont effectué(s) par l'intermédiaire d'un transfert de données, faisant en particulier appel à l'Internet.

17. Procédé selon l'une quelconque des revendications 11 à 16, **caractérisé en ce que** le couvercle est en communication avec un utilisateur par l'intermédiaire d'une unité d'entrée et/ou de sortie.
